# EUROPÄISCHE PATENTSCHRIFT

(11) **EP 0 887 396 B1**
(45) Veröffentlichungstag und Bekanntmachung des Hinweises auf die Patenterteilung: **21.05.2003**
(21) Anmeldenummer: 98111775.7
(22) Anmeldetag: 25.06.1998
(51) Int. Cl.: C09K 7/02

(54) **Feststoff-Zusammensetzung auf Basis von Tonmineralien und deren Verwendung**
Composition of solids based on clay minerals and their use
Composition de solides à base d'argiles et leur utilisation

(30) Priorität: 28.06.1997 DE 19727541
(43) Veröffentlichungstag der Anmeldung: 30.12.1998
(73) Patentinhaber: SKW Polymers GmbH, 83308 Trostberg (DE)
(72) Erfinder: Keilhofer, Gregor, Dr., 83342 Tacherting (DE); Plank, Johann, Dr., 83308 Trostberg (DE)
(74) Vertreter: Huber, Bernhard, Dipl.-Chem.

(56) Entgegenhaltungen:
- EP-A- 0 207 810
- WO-A-92/05123
- GB-A- 2 285 074
- US-A- 4 944 634
- US-A- 5 658 859
- LAVOIX F ET AL: "MIXED METAL HYDROXIDE DRILLING FLUID MINIMIZES WELL BORE WASHOUTS" OIL AND GAS JOURNAL, Bd. 90, Nr. 39, 28. September 1992, Seiten 87-90, XP000309754

## Beschreibung

Gegenstand der Erfindung ist eine Feststoff-Zusammensetzung auf Basis von Tonmineralien und deren Verwendung zur Herstellung einer wasserbasierten Bohrspülung.

Die Durchführung von Bohrungen zur Erschließung und Ausbeutung fossiler Energieträger, Wasser oder geothermischer Energie sowie zur Untertunnelung von Straßen oder Flußläufen erfordert den Einsatz einer Bohrspülung.

Die Funktion dieser Bohrspülung ist vielfältig und beinhaltet neben der Stabilisierung des Bohrlochs die Kühlung und Schmierung des Bohrmeißels, den Austrag des Bohrkleins bei zirkulierender sowie die Suspendierung des Bohrkleins bei ruhender Bohrspülung. Dies bedeutet, daß die Spülung unter Zirkulation dünnflüssig und turbulent verpumpbar sein sollte. Bei Stillstand der Spülung sollte eine sofortige gelartige Verdickung erfolgen, die das erneute Absinken des Bohrkleins zur Bohrlochsohle verhindert. Diese Art Fließverhalten wird als scherverdünnend bezeichnet, da die Viskosität als Proportionalitätsfaktor zwischen Schubspannung und Schergefälle mit wachsendem Schergefälle abnimmt.

Nach Bingham kann die Rheologie einer Bohrspülung durch die Fließgrenze (engl. Yield Point, YP [lbs/100 ft²]) und die plastische Viskosität (PV[cP]) beschrieben werden. Die Fließgrenze beschreibt die minimal erforderliche Schubspannung, die einen Festkörper zum Fließen anregt. Die weitere Steigerung der Schubspannung mit wachsendem Schergefälle heißt plastische Viskosität. Diese Parameter können durch Messung der Schubspannung in einem Rotationsviskosimeter mit Couette-Geometrie (z.B. FANN 35) bei unteschiedlichen Rotationsgeschwindigkeiten bestimmt werden. So ergibt sich die plastische Viskosität (PV) als Differenz der Schubspannungen bei 600 und 300 Umdrehungen pro Minute, die Fließgrenze YP als Differenz der PV und der Schubspannung bei 300 Umdrehungen pro Minute. Die Fließgrenze ist proportional zur Austragsfähigkeit einer Bohrspülung. Eine hohe plastische Viskosität führt zu niedrigem Bohrfortschritt.

Bohrspülungen können wasser- oder ölbasiert sein. Bei den wasserbasierten Spülungen wird meistens ein Tonmineral als Viskositätsgeber eingesetzt. Der Nachteil solcher Ton-Wasser-Spülungen besteht darin, daß bei der zur Erzielung einer ausreichenden Austragsfähigkeit der Spülung notwendigen Tonkonzentration auch die plastische Viskosität sehr hoch ist. Dies führt zu einem niedrigen Bohrfortschritt und ist daher ungünstig.

Aus den US-Patentschriften 4,664,843, 5,232,627, 5,532,212 und 5,576,271 sind Zusatzmittel auf Basis von gemischten Metallhydroxid-Derivaten bekannt, die die vorstehend beschriebenen Nachteile von wäßrigen Bohrspülungen vermindern oder beseitigen. Ein Nachteil der mit gemischten Metallhydroxiden behandelten Bohrspülungen besteht jedoch darin, daß eine komplizierte, sehr genau einzuhaltende und langwierige Anmischprozedur eingehalten werden muß. Hierzu muß eine 2 - 3 Gew.-%ige Bentonitsuspension hergestellt werden. Der Bentonit muß vor der Zugabe weiterer Additive sechs Stunden quellen. Anschließend müssen 0,2 - 0,3 Gew.-% Mischmetallhydroxid zugegeben und die Suspension z.B. durch kräftiges Rühren geschert werden. Der pH muß anschließend mit Soda oder NaOH auf 10,5 gestellt und das Gemisch anschließend weitere 60 Minuten gerührt werden. Zur genauen Einstellung des Fließverhaltens muß anschließend erneut Mischmetallhydroxid zugegeben und der pH-Wert nachgestellt werden. Die hierzu erforderliche Ausrüstung ist im Feld nicht immer vorhanden, was eine starke Einsatzbeschränkung der Spülung darstellt. Es gab bereits eine Vielzahl von Versuchen zur Vereinfachung dieses Verfahrens. So wurde versucht, die Komponenten Bentonit, Mischmetallhydroxid und Base in einer Trockenmischung zu kombinieren. Der Vorteil einer solchen Formulierung bestünde darin, daß lediglich ein Substanzgemisch dem vorgelegten Wasser zugegeben wird, die Prozedur somit verkürzt wird und die pH-Einstellung entfällt. Der Anwender würde eine sofort nutzbare Bohrspülung hoher Austragskraft erhalten.

Alle bisherigen Versuche in dieser Richtung scheiterten jedoch daran, daß solche Formulierungen schon nach wenigen Tagen keine viskositätsgebende Wirksamkeit mehr zeigten. Der Erfindung lag daher die Aufgabe zugrunde, eine Feststoff-Zusammensetzung auf Basis von Tonmineralien zu entwickeln, welche die genannten Nachteile des Standes der Technik nicht aufweist, sondern die Herstellung einer wasserbasierten Bohrspülung hoher Austragskraft auch nach mehrmonatiger Standzeit der Trockenmischung ermöglicht.

Diese Aufgabe wird gelöst durch eine Feststoff-Zusammensetzung, bestehend aus a) 40 - 99,8 Gew.-% eines Tonminerals mit einem reduzierten Feuchtigkeitsgehalt von ≤ 7 Gew.-%, b) 0,01 - 30 Gew.-% eines gemischten Metallhydroxid-Derivats und c) 0,01 bis 30 Gew.-% einer festen Base sowie gegebenenfalls noch weiteren Additiven. Es hat sich überraschenderweise gezeigt, daß die erfindungsgemäße Feststoff-Zusammensetzung ein einfach anwendbares Verdickungsmittel für wasserbasierte Bohrspülungen darstellt und eine Langzeitstabilität von mindestens drei Monaten aufweist.

Die erfindungsgemäße Feststoff-Zusammensetzung besteht aus mindestens drei Komponenten. Die Hauptkomponente mit 40 - 99,8 Gew.-% ist ein Tonmineral, welches vorzugsweise aus Bentonit, Sepiolit, Attapulgit oder aus synthetischen Tonen, wie z.B. Hektorit, sowie deren Kombinationen besteht. Besonders bevorzugt wird Bentonit. Sie liegt vorzugsweise in Pulverform vor.

Es ist erfindungswesentlich, daß die Restfeuchte der zur Herstellung der verdickenden Formulierung verwendeten Tonminerale von ursprünglich ca. 10 Gew.-% auf unter 7 Gew.-%, vorzugsweise unter 5 Gew.-%, besonders bevorzugt auf 2 % oder niedriger vermindert ist. Dies kann z.B. durch Trocknen des Tonminerals, z.B. bei einer Temperatur von 110 °C, geschehen. Die Dauer der Temperatureinwirkung bestimmt die Höhe der Restfeuchte. Jedoch kann die Trocknung auch bei höherer oder niedrigerer Temperatur erfolgen, sowie nach anderen, dem Fachmann geläufigen Trocknungsmethoden.

Die zweite erfindungswesentliche Komponente b) besteht aus 0,01 - 30 Gew.-% eines gemischten Metallhydroxid-Derivats, wie es beispielsweise in den US-Patentschriften 4,664,843, 5,232,627, 5,532,212 oder 5,576,271 beschrieben wird. Unter gemischten Metallhydroxid-Derivaten im Rahmen der vorliegenden Erfindung sind sowohl gemischte Metallhydroxide in fester Form als auch solche Edukte bzw. Vorläufer zu verstehen, die mit Basen in der wasserbasierten Bohrspülung gemischte Metallhydroxide bilden. Gemäß einer bevorzugten Ausführungsform werden gemischte Metallhydroxide auf Basis von Magnesium und Aluminium eingesetzt. Beispiele hieraus sind MgAl(OH)_{4,7}Cl_{0,3} und dehydratisierter Hydrotalcite.

Die dritte erfindungswesentliche Komponente c) besteht schließlich aus 0,01 bis 30 Gew.-% mindestens einer festen Base. Als Basen werden aus Kostengründen anorganische bevorzugt. Besonders bevorzugt werden Basen aus der Gruppe Na₂CO₃, CaO, Ca(OH)₂, NaAlO₂, Al(OH)₃, oder/und Ba(OH)₂ verwendet. Jedoch können auch andere festen basischen Verbindungen aus der Gruppe der Alkali-, Erdalkali- und Erdmetalle verwendet werden, insbesondere solche, die pulverförmig stabil sind.

Außer den essentiellen Komponenten a), b) und c) kann die erfindungsgemäße Zusammensetzung noch weitere Substanzen enthalten. Ein Beispiel für ein solches geeignetes Additiv sind nichtionische Polymere als filtratreduzierende Mittel. Als filtratreduzierendes Mittel, welches vorzugsweise in einer Menge von 0,5 - 60 Gew.-%, bezogen auf das Gesamtgewicht der Komponenten a), b) und c), eingesetzt wird, hat sich hierbei besonders ein Polysaccharid bewährt, welches gegebenenfalls teilweise verethert und/oder verestert sein kann. Bevorzugte Polysaccharide dieser Art sind Guar Gum, Cellulose, Stärke, Johannisbrotkernmehl und Cassia. Als teilweise veretherte und/oder veresterte Polysaccharide werden insbesondere mit Hydroxyethyl- und/oder Hydroxypropyl- und/oder Carboxymethyl-Gruppen modifizierte Derivate eingesetzt.

Außer dem filtratreduzierenden Mittel können der erfindungsgemäßen Feststoff-Zusammensetzung bei Bedarf auch noch weitere Additive zugesetzt werden, beispielsweise Beschwerungsmittel, Entschäumer, Schmiermittel, Korrosionsinhibitoren, Schutzkolloide und Salze. Solche Additive sind dem Fachmann bekannt und bedürfen hier keiner näheren Beschreibung.

Die Herstellung der erfindungsgemäßen Feststoff-Zusammensetzung ist einfach. Zweckmäßig werden die Komponenten nach bekannten Methoden homogenisiert und in ein verschließbares Gebinde abgefüllt. In dieser Form ist die erfindungsgemäße Feststoff-Zusammensetzung unter Erhalt der viskositätsgebenden Wirkung mehr als 6 Monate stabil.

Die erfindungsgemäße Feststoff-Zusammensetzung eignet sich in besonderer Weise zur Herstellung einer wasserbasierten Bohrspülung. Hierzu wird die gesamte Feststoff-Zusammensetzung in einer solchen Menge in Wasser eingerührt, daß der Feststoffgehalt 1 bis 25 Gew.-%, bezogen auf das Gesamtgewicht der Bohrspülung beträgt.

Die besonderen Vorteile der erfindungsgemäßen Feststoff-Zusammensetzung bestehen darin, daß die Zugabe dieser Zusammensetzung zu Wasser in einem Einschritt-Verfahren ohne Quellvorgänge oder pH-Kontrollen zu einer sofort nutzbaren wasserbasierten Bohrspülung hoher Austragskraft führt.

Die nachfolgenden Beispiele erläutern die Erfindung näher.

### Beispiele

Die Eigenschaften der in den nachfolgenden Beispielen hergestellten Spülungen werden nach den Vorschriften des American Petroleum Institute (API) gemäß Richtlinie RP13B-1 bestimmt.

Die Rheologie der Spülungen wird mit dem in der API-Richtlinie beschriebenen FANN-Viscometer bei 600, 300, 200, 100, 6 und 3 Umdrehungen je Minute gemessen. PV und YP werden nach API RP13B-1 berechnet, die Gelstärken gemäß API RP13B-1 gemessen.

### Beispiel 1

Das Beispiel vergleicht den Prozeß der sukzessiven Zugabe der Einzelkomponenten Bentonit, Mischmetallhydroxid und Base sowie die hierzu erforderliche Zeit mit der Zugabe der identischen, aber gemäß Erfindung zu einer Formulierung vereinigten Komponenten.

Die zugegebene Menge aller Komponenten ist in beiden Anwendungen gleich.

### Durchführung

### a) Sukzessive Zugabe der Einzelkomponenten:

- 350 g Wasser in Hamilton Beach Mixer Cup vorlegen, auf Stufe "low" rühren
- 10,5 g Wyoming Bentonit zugeben, 6 Stunden rühren
- 1,05 g gemischtes Metallhydroxid gemäß US-Patent Nr. 4,664,843, Beispiel 1, zugeben (MgAl(OH)_{4,7}Cl_{0,3})
- 0,1 g NaOH zugeben
- 30 min rühren

### b) Gleichzeitige Zugabe der Komponenten in Form einer Mischung:

- 350 g Wasser im Hamilton Beach Mixer Cup vorlegen, auf Stufe "low" rühren
- Gemisch aus 10,5 g Wyoming Bentonit, 1,05 g Mischmetallhydroxid gemäß US-PS 4,664,843 (Beispiel 1) und 0,1 g NaOH zugeben
- 30 min rühren

### -Ergebnisse:

| Experiment | FANN-Rheologie 600-300-200-100-6-3 | GS | | PV [cP] | YP [lb/100ft²] |
|---|---|---|---|---|---|
| | | 10'' | 10' | | |
| a) | 200-164-149-132-54-44 | 37 | 35 | 36 | 128 |
| b) | 175-141-125-110-48-44 | 41 | 48 | 34 | 107 |

Wie das Beispiel zeigt, kann durch gleichzeitige Zugabe der zu einer Formulierung vereinigten Komponente der Vorgang der Spülungsanmischung stark verkürzt und vereinfacht werden. Die folgenden Beispiele verdeutlichen den Einfluß der Feuchte des in der Formulierung verwendeten Tonminerals auf die Stabilität der hergestellten viskositätsgebenden Mischung:

### Beispiel 2

### a) - Zusammensetzung der Trockenmischung:

- 10,5 g: mit Soda behandelter Ca-Bentonit unterschiedlicher Feuchte
- 1,05 g: gemischtes Metallhydroxid gemäß US-PS 5,232,627 (Beispiel 5, dehydratisierter Hydrotaicite)
- 0,22 g: NaOH fest

### - Durchführung des Tests:

- 350 g: Wasser in Hamilton Beach Mixer Cup vorlegen, auf Stufe "low" rühren
- 11,77 g: Trockenmischung zugeben
30 Minuten rühren
FANN Rheologie messen

### - Ergebnisse:

| Lagerungszeit [Tage] | Feuchte Bentonit [Gew.-%] | FANN Rheologie 600-300-200-100-6-3 | GS | | PV [cP] | YP [lb/100 ft²] |
|---|---|---|---|---|---|---|
| | | | 10'' | 10' | | |
| 0 | 8 | 44-41-36-29-16-11 | 12 | 17 | 3 | 38 |
| 5 | 8 | 10-7-6-5-4-4 | 7 | 23 | 3 | 4 |
| 0 | <1 | 69-62-49-37-16-11 | 17 | 20 | 7 | 55 |
| 5 | <1 | 65-66-43-33-14-10 | 16 | 19 | 10 | 45 |
| 20 | <1 | 63-55-41-30-13-11 | 16 | 18 | 8 | 47 |

### b) - Zusammensetzung der Trockenmischung:

- 14 g: behandelter Bentonit unterschiedlicher Feuchte
- 1,4 g: gemischtes Metallhydroxid gemäß US-PS 5,232,627 (Beispiel 5)
- 0,2 g: Ca(OH)₂

### - Durchführung des Tests:

- 350 g: Wasser in Hamilton Beach Mixer Cup vorlegen, auf Stufe "low" rühren
- 15,60 g: Trockenmischung zugeben
30 Minuten rühren
FANN Rheologie messen

### - Ergebnisse:

| Lagerungszeit [Tage] | Feuchte Bentonit [Gew.-%] | FANN Rheologie 600-300-200-100-6-3 | GS | | PV [cP] | YP [lb/100 ft²] |
|---|---|---|---|---|---|---|
| | | | 10'' | 10' | | |
| 0 | | 151-123-104-80-45-28 | 31 | 34 | 28 | 95 |
| 3 | 9 | 74-65-60-51-38-22 | 27 | 44 | 9 | 56 |
| 7 | | 27-26-25-25-29-20 | 23 | 44 | 1 | 25 |
| 0 | | 180-151-130-96-51-40 | 40 | 47 | 29 | 122 |
| 7 | | 172-139-122-98-47-40 | 42 | 50 | 33 | 106 |
| 14 | 1 | 175-142-121-95-43-41 | 40 | 45 | 33 | 109 |
| 21 | | 169-149-125-101-48-40 | 41 | 48 | 20 | 129 |
| 28 | | 165-150-135-100-45-39 | 39 | 45 | 15 | 135 |

### Beispiel 3

### - Zusammensetzung der Trockenmischung:

- 10,5 g: Bentonit mit niedrigem Na-Montmorillonit-Gehalt
- 1,05 g: gemischtes Metallhydroxid gemäß US-PS 5,232,627 (Beispiel 5)
- 0,65 g: NaAlO₂

### - Durchführung des Tests:

- 350 g: Wasser in Hamilton Beach Mixer cup vorlegen, auf Stufe "low" rühren
- 12,2 g: Trockenmischung zugeben
30 Minuten rühren
FANN Rheologie messen

### - Ergebnisse:

| Lagerungszeit [Tage] | Feuchte Bentonit [Gew.-%] | FANN Rheologie 600-300-200-100-6-3 | GS | | PV [cP] | YP [lb/100 ft²] |
|---|---|---|---|---|---|---|
| | | | 10'' | 10' | | |
| 0 | 10 | 35-27-24-23-12-8 | 10 | 13 | 8 | 19 |
| 2 | 10 | 11-9-8-7-6-6 | 6 | 7 | 2 | 7 |
| | | | | | | |
| 0 | 1 | 34-26-23-19-8-5 | 9 | 12 | 8 | 18 |
| 2 | 1 | 32-25-22-18-7-5 | 7 | 7 | 7 | 18 |
| 7 | 1 | 34-26-23-20-8-7 | 8 | 8 | 8 | 18 |
| 20 | 1 | 33-25-22-20-7-5 | 8 | 8 | 8 | 17 |

### Beispiel 4

### a) - Zusammensetzung der Trockenmischung:

- 10,5 g: Bentonit mit hohem Na-Montmorillonit-Gehalt (hochwertiger Wyoming Bentonit)
- 0,9 g: gemischtes Metallhydroxid gemäß US-PS 5,232,627 (Beispiel 5)
- 0,22 g: NaOH fest

### - Durchführung des Tests:

- 350 g: Wasser in Hamilton Beach Mixer Cup vorlegen, auf Stufe "low" rühren
- 11,66 g: Trockenmischung zugeben
30 Minuten rühren
FANN Rheologie messen

### - Ergebnisse:

| Lagerungszeit [Tage] | Feuchte Bentonit [Gew.-%] | FANN Rheologie 600-300-200-100-6-3 | GS | | PV [cP] | YP [lb/100 ft²] |
|---|---|---|---|---|---|---|
| | | | 10'' | 10' | | |
| 0 | 8 | 190-165-152-131-55-43 | 41 | 45 | 25 | 140 |
| 2 | 8 | 8-6-5-4-4-2 | 3 | 4 | 2 | 4 |
| 0 | 1 | 204-184-169-148-69-53 | 50 | 53 | 26 | 164 |
| 4 | 1 | 198-174-159-138-65-49 | 53 | 52 | 24 | 150 |
| 20 | 1 | 169-153-140-123-72-60 | 49 | 52 | 16 | 137 |

### b) - Zusammensetzung der Trockenmischung:

- 9 g: Wyoming Bentonit mit hohem Na-Montmorillonit-Gehalt
- 0,9 g: gemischtes Metallhydroxid gemäß US-PS 4,664,843 (Beispiel 1)
- 0,2 g: Soda

### - Durchführung des Tests:

- 350 g: Wasser in Hamilton Beach Mixer Cup vorlegen, auf Stufe "low" rühren
- 10,1 g: Trockenmischung zugeben
30 Minuten rühren
FANN Rheologie messen

### - Ergebnisse:

| Lagerungszeit [Tage] | Feuchte Bentonit [Gew.-%] | FANN Rheologie 600-300-200-100-6-3 | GS | | PV [cP] | YP [lb/100 ft²] |
|---|---|---|---|---|---|---|
| | | | 10'' | 10' | | |
| 0 | 10 | 82-74-69-62-21-19 | 19 | 19 | 8 | 66 |
| 2 | | 21-18-17-16-14-12 | 13 | 17 | 3 | 15 |
| 0 | 2 | 76-65-54-46-25-18 | 18 | 21 | 12 | 53 |
| 17 | | 65-57-52-45-26-22 | 17 | 19 | 8 | 49 |

### Beispiel 5

- Zusammensetzung der Trockenmischung:
   - 14 g: Wyoming Bentonit mit hohem Na-Montmorillonit-Gehalt
   - 0,93 g: Magnesiumoxid
   - 0,47 g: NaAlO₂
- Durchführung des Tests:
   - 350 g: Wasser in Hamilton Beach Mixer Cup vorlegen, auf Stufe "low" rühren
   - 15,4 g: Trockenmischung zugeben
   30 Minuten rühren
   FANN Rheologie messen

### - Ergebnisse:

| Lagerungszeit [Tage] | Feuchte Bentonit [Gew.-%] | FANN Rheologie 600-300-200-100-6-3 | GS | | PV [cP] | YP [lb/100 ft²] |
|---|---|---|---|---|---|---|
| | | | 10'' | 10' | | |
| 0 | 10 | 93-84-80-73-32-26 | 26 | 30 | 9 | 75 |
| 7 | | 12-9-8-7-8-8 | 8 | 12 | 3 | 6 |
| 0 | | 81-73-62-53-30-17 | 22 | 25 | 8 | 65 |
| 14 | 1 | 75-62-57-50-29-20 | 23 | 21 | 13 | 49 |
| 28 | | 77-63-60-48-29-21 | 22 | 24 | 14 | 49 |

### Beispiel 6

- Zusammensetzung der Trockenmischung:
   - 14 g: modifizierter Ca-Bentonit
   - 1,4 g: gemischtes Metallhydroxid gemäß US-PS 5,232,627 (Beispiel 5)
   - 0,2 g: Ca(OH)₂
- Durchführung des Tests:
   - 350 g: Wasser in Hamilton Beach Mixer Cup vorlegen, auf Stufe "low" rühren
   - 15,6 g: Trockenmischung zugeben
   30 Minuten rühren
   FANN Rheologie messen

### - Ergebnisse

| Alterungszeit [Tage] | Feuchte Bentonit [Gew.-%] | FANN Rheologie 600-300-200-100-6-3 | GS | | PV [cP] | YP [lb/100 ft²] |
|---|---|---|---|---|---|---|
| | | | 10'' | 10' | | |
| 0 | 10 | 43-41-39-38-28-23 | 27 | 46 | 2 | 39 |
| 2 | 10 | 7-5-4-3-3-3 | 2 | 2 | 2 | 3 |
| 0 | 5 | 34-32-32-31-27-24 | 24 | 45 | 2 | 30 |
| 2 | 5 | 31-28-27-27-22-19 | 21 | 38 | 3 | 25 |
| 15 | 5 | 29-27-26-26-23-21 | 24 | 43 | 2 | 25 |
| 30 | 5 | 30-28-26-26-22-20 | 22 | 40 | 2 | 26 |
| 60 | 5 | 28-26-24-23-21-19 | 21 | 36 | 2 | 24 |
| 120 | 5 | 30-27-25-22-21-19 | 20 | 41 | 3 | 24 |

## Patentansprüche

1. Feststoff-Zusammensetzung auf Basis von Tonmineralien insbesondere zur Herstellung wasserbasierter Bohrspülungen, bestehend aus
a) 40 - 99,8 Gew.-% wenigstens eines Tonminerals mit einem reduzierten Feuchtigkeitsgehalt von ≤ 7 Gew.-%,
b) 0,01 - 30 Gew.-% eines gemischten Metallhydroxid-Derivats und
c) 0,01 - 30 Gew.-% wenigstens einer festen Base sowie
gegebenenfalls noch weiteren Additiven.

2. Zusammensetzung nach Anspruch 1,
**dadurch gekennzeichnet,**
**daß** das Tonmineral einen reduzierten Feuchtigkeitsgehalt von ≤ 5 Gew.-% aufweist.

3. Zusammensetzung nach den Ansprüchen 1 und 2,
**dadurch gekennzeichnet,**
**daß** das Tonmineral aus Bentonit, Sepiolit, Attapulgit oder aus synthetischen Tonen, z.B. Hektorit, sowie deren Kombinationen ausgewählt ist.

4. Zusammensetzung nach den Ansprüchen 1 bis 3,
**dadurch gekennzeichnet,**
**daß** das gemischte Metallhydroxid-Derivat ein Hydroxid auf Basis von Magnesium und Aluminium darstellt.

5. Zusammensetzung nach den Ansprüchen 1 bis 3,
**dadurch gekennzeichnet,**
**daß** sie als Base wenigstens eine Verbindung, ausgewählt aus der Gruppe Na₂CO₃, CaO, Ca(OH)₂, NaAlO₂, Al(OH)₃, Ba(OH)₂ enthält.

6. Zusammensetzung nach den Ansprüchen 1 bis 5,
**dadurch gekennzeichnet,**
**daß** sie als weiteres Additiv ein filtratreduzierendes Mittel in einer Menge von 0,5 - 60 Gew.-%, bezogen auf das Gesamtgewicht der Komponenten a), b) und c) enthält.

7. Zusammensetzung nach Anspruch 6,
**dadurch gekennzeichnet,**
**daß** das filtratreduzierende Mittel ein gegebenenfalls teilweise verethertes und/oder verestertes Polysaccharid darstellt.

8. Zusammensetzung nach Anspruch 7,
**dadurch gekennzeichnet,**
**daß** sie wenigstens ein Polysaccharid aus der Gruppe Guar Gum, Cellulose, Stärke, Johannisbrotkernmehl oder Cassia enthält.

9. Zusammensetzung nach Anspruch 7,
**dadurch gekennzeichnet,**
**daß** sie ein mit Hydroxyethyl und/oder Hydroxypropyl- und/oder Carboxymethyl-Gruppen teilweise verethertes und/oder verestertes Polysaccharid enthält.

10. Verfahren zur Herstellung einer wasserbasierten Bohrspülung,
**dadurch gekennzeichnet,**
**daß** man eine Feststoff-Zusammensetzung nach einem der Ansprüche 1 bis 9 in einer solchen Menge in Wasser einrührt, daß der Feststoffgehalt 1 bis 25 Gew.-%, bezogen auf das Gesamtgewicht der Bohrspülung beträgt.

## Claims

1. Composition of solids based on clay minerals in particular for the production of water-based drilling fluids and consisting of
a) 40 - 99.8 % by weight of at least one clay mineral with a reduced moisture content of ≤ 7 % by weight,
b) 0.01 - 30 % by weight of a mixed metal hydroxide derivative and
c) 0.01 - 30 % by weight of at least one solid base and
optionally other additives.

2. Composition as claimed in claim 1,
**characterized in that**
the clay mineral has a reduced moisture content of ≤ 5 % by weight.

3. Composition as claimed in claims 1 and 2,
**characterized in that**
the clay mineral is selected from bentonite, sepiolite, attapulgite or from synthetic clays such as hectorite, or combinations thereof.

4. Composition as claimed in claims 1 to 3,
**characterized in that**
the mixed metal hydroxide derivative is a hydroxide based on magnesium and aluminium.

5. Composition as claimed in claims 1 to 3,
**characterized in that**
it contains at least one compound selected from the group Na₂CO₃, CaO, Ca(OH)₂, NaAlO₂, Al(OH)₃ and Ba(OH)₂ as the base.

6. Composition as claimed in claims 1 to 5,
**characterized in that**
it contains a filtrate-reducing agent as an additional additive in a quantity of 0.5 - 60 % by weight based on the total weight of the components a), b) and c).

7. Composition as claimed in claim 6,
**characterized in that**
the filtrate-reducing agent is a polysaccharide which is optionally partially etherified and/or esterified.

8. Composition as claimed in claim 7,
**characterized in that**
it contains at least one polysaccharide from the group guar gum, cellulose, starch, carob seed flower or cassia.

9. Composition as claimed in claim 7,
**characterized in that**
it contains a polysaccharide which is partially etherified and/or esterified with hydroxyethyl and/or hydroxypropyl and/or carboxymethyl groups.

10. Process for producing a water-based drilling fluid,
**characterized in that**
a solids composition as claimed in one of the claims 1 to 9 is stirred into water in such a quantity that the solids content is 1 to 25 % by weight based on the total weight of the drilling fluid.

## Revendications

1. Composition de matières solides à base de minéraux argileux, en particulier pour la préparation de fluides de forage à base d'eau, constituée de
a) 40 à 99,8 % en poids d'au moins un minéral argileux ayant une teneur en humidité réduite, inférieure ou égale à 7 % en poids,
b) 0,01 à 30 % en poids d'un dérivé d'hydroxyde métallique mixte et
c) 0,01 à 30 % en poids d'au moins une base solide et éventuellement d'autres additifs.

2. Composition selon la revendication 1, **caractérisée en ce que** le minéral argileux a une teneur en humidité réduite inférieure ou égale à 5 % en poids.

3. Composition selon les revendications 1 et 2, **caractérisée en ce que** le minéral argileux est choisi parmi la bentonite, la sépiolite, l'attapulgite ou des argiles synthétiques, par exemple l'hectorite, et leurs combinaisons.

4. Composition selon les revendications 1 à 3, **caractérisée en ce que** le dérivé d'hydroxyde métallique mixte est un hydroxyde à base de magnésium et d'aluminium.

5. Composition selon les revendications 1 à 3, **caractérisée en ce qu'**elle contient comme base au moins un composé choisi dans le groupe Na₂CO₃, CaO, Ca(OH)₂, NaAlO₂, Al(OH)₃, Ba(OH)₂.

6. Composition selon les revendications 1 à 5, **caractérisée en ce qu'**elle contient comme additif supplémentaire un agent réducteur de filtrat en une quantité de 0,5 à 60 % en poids par rapport à la masse totale des constituants a), b) et c).

7. Composition selon la revendication 6, **caractérisée en ce que** l'agent réducteur de filtrat est un polysaccharide éventuellement partiellement éthérifié et/ou estérifié.

8. Composition selon la revendication 7, **caractérisée en ce qu'**elle contient au moins un polysaccharide du groupe gomme guar, cellulose, amidon, farine de caroube ou cassia.

9. Composition selon la revendication 7, **caractérisée en ce qu'**elle contient un polysaccharide partiellement éthérifié et/ou estérifié avec des groupes hydroxyéthyle et/ou hydroxypropyle et/ou carboxyméthyle.

10. Procédé de préparation d'un fluide de forage à base d'eau, **caractérisé en ce que** l'on incorpore dans de l'eau une composition de matières solides selon l'une des revendications 1 à 9 en une quantité telle que la teneur en matières sèches soit de 1 à 25 % en poids par rapport à la masse totale du fluide de forage.
